Europäisches Patentamt

European Patent Office

Office européen des brevets

(11) Veröffentlichungsnummer: **0 281 953**
**B1**

(12) **EUROPÄISCHE PATENTSCHRIFT**

(45) Veröffentlichungstag der Patentschrift:
**07.02.90**

(51) Int. Cl.⁴: **C05D 5/00**, C05D 11/00

(21) Anmeldenummer: **88103321.1**

(22) Anmeldetag: **04.03.88**

(54) Verfahren zum Granulieren wasserlöslicher Dünger mit hohem Kieseritanteil.

(30) Priorität: **11.03.87 DE 3707785**

(43) Veröffentlichungstag der Anmeldung:
**14.09.88 Patentblatt 88/37**

(45) Bekanntmachung des Hinweises auf die Patenterteilung:
**07.02.90 Patentblatt 90/6**

(84) Benannte Vertragsstaaten:
**AT CH FR IT LI**

(56) Entgegenhaltungen:
**US-A- 3 378 363**

(73) Patentinhaber: **KALI UND SALZ AKTIENGESELLSCHAFT,
Friedrich-Ebert-Strasse 160 Postfach 10 20 29,
D-3500 Kassel(DE)**

(72) Erfinder: **Löblich, Karl-Richard, Dr., Leibnizstrasse 106,
D-3013 Barsinghausen1(DE)**
Erfinder: **Bruns, Günter, Vogelkamp 9,
D-3015 Wennigsen 1(DE)**
Erfinder: **Zentgraf, Helmut, Dr., Zum Sand 7,
D-6419 Burghaun-Steinbach(DE)**
Erfinder: **Czaplinsky, Ernst, Gretenbergerstrasse 28,
D-3163 Sehnde 1(DE)**

## Beschreibung

Auf an Magnesium verarmten Böden hat sich die Düngung mit Kieserit und anderen wasserlöslichen Düngern mit hohem Kieseritanteil bewährt, weil das Magnesiumion aus dem wasserlöslichen Magnesiumsulfathydrat der Pflanzenwurzel schnell zur Verfügung steht. Die moderne Düngetechnik fordert für die auszubringenden Düngemittel die Granulatform.

Das Granulieren von Kieserit und von kieseritreichen Mischungen durch Rollaufbau hat sich als sehr schwierig erwiesen. Dies hat seine Ursache in den physiko-chemischen Eigenschaften des Kieserits.

Aus der DE-PS 36 18 058 ist bekannt, dem in der optimalen Körnung vorliegenden kieseritreichen Granuliergut ein Granulierhilfsmittel aus der Klasse der Saccharide zuzusetzen. Dieser Vorschlag konnte nicht nur bei der Rollgranulation im Granulierlabor, sondern auch in großtechnischem Maßstab mit Erfolg angewendet werden.

Beim Granulieren von Massendüngern spielt der Preis der Granulierhilfsmittel eine ganz erhebliche Rolle. Außerdem muß die ständige Verfügbarkeit gesichert sein. Diese ist bei vielen Saccharide enthaltenden Abfallprodukten nicht immer gegeben, da diese saisonal unterschiedlich anfallen und eine begrenzte Lagerbarkeit haben.

Daher stellt sich die Aufgabe, nach alternativen Hilfsmitteln zur günstigen Beeinflussung des Aufbaus von Granalien durch Rollen einer angefeuchteten kieseritreichen Granuliermischung zu suchen, welche außerdem die Festigkeit der Granalien über lange Zeiträume hinweg sichern.

Eine methodische Alternative zum Rollgranulieren ist die Preßgranulation, welche aber gerade bei kieseritreichen Düngern bei Abwesenheit von Alkalichloriden ganz besondere Schwierigkeiten bereitet. Dies beruht auf der Starrheit des Kristallgitters der kristallinen Kieseritteilchen.

Zur Überwindung der genannten Schwierigkeiten wurde in der DE-PS 31 48 404 vorgeschlagen, dem Kieserit eine Lösung von Natriumsulfat oder von Alkalisilikaten, -boraten oder -phosphaten vor dem Pressen zuzusetzen. Diese Maßnahme führte zu einer Verbesserung der Schülpenbildung und der Qualität der durch Brechen der Schülpen hergestellten Kieseritgranulate. Der erzielte Fortschritt reichte jedoch nicht aus, dem Verfahren einen dauerhaften Eingang in die Technik zu verschaffen.

Es wurde dann versucht, die beim Pressen gesammelten Erfahrungen auf das Rollgranulieren zu übertragen, obwohl der Vorgang des Granalienaufbaus hierbei ein ganz anderer ist. Beim Einsatz von Natriumsulfat zur angefeuchteten Granuliermischung konnte eine ausreichende Granalienbildung nur bei einer recht hohen Dosierung des Natriumsulfates erreicht werden. Die hohe Einsatzmenge hat sich als nachteilig erwiesen, weil sie in Verbindung mit der hohen Restfeuchte, die man zum Stabilisieren der Bindung in den Granalien beim Trocknen belassen muß, den Wertstoffgehalt des Granulats empfindlich drückt. Deshalb wurde an der Übertragbarkeit von Erfahrungen, welche beim Preßgranulieren gewonnen worden waren, auf die Rollgranulierung lange Zeit gezweifelt.

Nun wurde überraschend gefunden, daß der Aufbau der Granalien beim Rollen angefeuchteten Kieserits im Gegensatz zur Verwendung von Natriumsulfat als Hilfsmittel für das Rollgranulieren schon durch äußerst geringe Zusatzmengen an Alkaliphosphat in der Größenordnung von 2 bis 6 kg pro t Gutkorn sehr gefördert wird, und die auf eine Restfeuchte von 1 bis 4 % getrockneten Granalien im Gegensatz zu denen, welche ohne Hilfsmittel hergestellt worden sind, eine große Lagerstabilität aufweisen.

Zusätzlich wurde gefunden, daß man das Alkaliphosphat als Granulierhilfsmittel durch wasserlösliches Calciumdihydrogenphosphat ersetzen kann. Wegen seiner geringen Lösegeschwindigkeit braucht man hiervon jedoch eine Einsatzmenge, welche stark von der Körnung dieses Hilfsmittels abhängt und sich zwischen 10 und 80 kg pro t Gutkorn bewegt.

Unter den als geeignete Granulierhilfsmittel aufgefundenen Alkaliphosphaten sind alle Verbindungen des Natriums, des Kaliums und in erweitertem Sinne auch die des Ammoniums mit Dihydrogenphosphat-, Hydrogenphosphat- und Phosphatanionen zu verstehen. Die Hilfsmittel auf der Basis wasserlöslicher Phosphate verzögern die vorschnelle Hydratation feinster Kieseritanteile in der angefeuchteten Kieseritgranuliermasse und verlangsamen die Reaktion zwischen den Komponenten einer Mischung aus Kieserit und Kaliumsalzen, speziell Kaliumsulfat. Diese Reaktionen sind zwar zur Verfestigung der Granalien erwünscht, sie dürfen aber nicht so schnell ablaufen, daß sie schon vor dem Rollaufbau und der Verdichtung der Granalien bei weiterem Rollen weitgehend beendet sind.

Die beste Wirkung der gefundenen Hilfsmittel für die Rollgranulierung wird dann erzielt, wenn der Kieserit oder die kieseritreiche Mischung in einer solchen Kornverteilung vorliegt, welche die optimale Gefügeverdichtung beim Rollen ermöglicht. Der Durchmesser der größten Primärteilchen in der Granuliermischung muß deutlich unter der Untergrenze des Gutkornbereichs des Produkts liegen.

Ferner sollen ausreichend Feinstanteile vorhanden sein. Ein an sich für das Rollgranulieren ungeeignetes Kornspektrum der Primärteilchen läßt sich meistens durch Zugabe einer staubfein gemahlenen Komponente der Mischung im Verhältnis von 1 Teil Staub auf 2,5 bis 4 Teile groberen Granuliergutes korrigieren. Die staubfein gemahlene Komponente, bevorzugt Staubkieserit, soll zumindest 50 % durch ein Sieb von 63 μm Maschenweite gehen. An das in die Granuliermischung einzubindende Rückgut, das dem Fehlkorn der kontinuierlichen Granulierung entstammt, brauchen nicht ganz so strenge Forderungen gestellt zu werden wie an das Frischgut in der Mischung.

Das Verfahren der Erfindung wird durch folgende Beispiele erläutert:

Beispiel 1

306 Gewichtsteile eines Kieserits mit $d_E = 0,4$ mm und einem Gleichmäßigkeitskoeffizienten n = 1,8 werden mit 194 Gewichtsteilen Staubkieserit mit einer Körnung von 60 % < 0,063 mm, mit 5 Gewichtsteilen Calciumdihydrogenphosphatmonohydrat mit einer Körnung von 80 % < 0,063 mm und mit 414 Gewichtsteilen Rückgut, welches durch Absieben bzw. Aufmahlen von Fehlkorn auf eine Körnung von 50 % < 0,5 mm hergestellt wird, trocken vorgemischt und dann mit 81 Gewichtsteilen Wasser befeuchtet. Die feuchte Mischung wird einer rotierenden Granuliertrommel zugeführt. Hierin bauen sich während des Abrollvorganges die grünen (frischen, feuchten) Granalien auf, die sich beim weiteren Rollen zu grünfesten kugeligen Gebilden verdichten. Die grünen Granalien werden anschließend auf eine Restfeuchte von 1,5 % getrocknet. Die getrockneten Granalien werden dann gesiebt, wobei 513 Gewichtsteile Gutkorn mit einer Körnung von 1 bis 4 mm als Produkt gewonnen werden. 372 Gewichtsteile des Granulates fallen als Unterkorn an, welches an den Prozeßanfang zurückgeführt wird. Die 42 Gewichtsteile Überkorn werden auf < 0,5 mm aufgemahlen und ebenfalls zurückgeführt.

Die Gutkornausbeute beträgt 55 % der theoretisch möglichen, bezogen auf die Gesamtmischung. Ohne Granulierhilfmittel liegt die Gutkornausbeute bei 37 %. In der anfänglichen Berstfestigkeit und im Abriebtest besteht kein Unterschied zwischen beiden Verfahrensweisen. Nach einem Tag Lagerzeit zieht die Festigkeit der mit Phosphat hergestellten Granalien stärker an als die der ohne Phosphat. Nach vierwöchiger Lagerzeit haben die Granalien ohne Phosphat 9 N/Korn Berstfeste und die mit Calciumdihydrogenphosphat als Granulierhilfsmittel hergestellten Granalien eine solche von 33 N/Korn. Letztere zeigen im Abriebtest 2 bis 3 % Abrieb.

Beispiel 2

Setzt man der in Beispiel 1 beschriebenen Mischung 7 Gewichtsteile eines Triplesuperphosphats mit rund 70 % Calciumdihydrogenphosphatmonohydrat in einer Aufmahlung mit einem Körnungsschwerpunkt nahe 0,1 mm anstelle des feinteiligen Phosphats zu, so beobachtet man nur einen relativ schwachen Effekt sowohl hinsichtlich der Gutkornausbeute der Granulation, die sich etwas oberhalb 40 % bewegt, als auch hinsichtlich der Abriebfestigkeit, die nach 4 Wochen bei 11 % liegt.

Beispiel 3

Setzt man der in Beispiel 1 beschriebenen Mischung dagegen 25 Gewichtsteile des in Beispiel 2 beschriebenen Triplesuperphosphats anstelle der 5 Gewichtsteile des feinteiligen Calciumdihydrogenphosphatmomohydrats zu, dann erhält man praktisch die gleichen Ergebnisse wie in Beispiel 1; die Gutkornausbeute liegt zwischen 50 und 55 %. Der Abrieb liegt nach 4 Wochen im Test bei 2 bis 3 %. Die Berstfeste erreicht fast 40 N/Korn.

Beispiel 4

Zu einer Vormischung aus 438 Gewichtsteilen Rückgut, 369 Gewichtsteilen Kieserit mit $d_E = 0,4$ mm und 124 Gewichtsteilen Staubkieserit wird eine Lösung von 1 Gewichtsteil Kaliumdihydrogenphosphat in 68 Gewichtsteilen Wasser zum Befeuchten zugesetzt. Nach dem Rollen und Trocknen auf eine Restfeuchte von 2 % lassen sich 504 Gewichtsteile Gutkorn zwischen 1 und 4 mm absieben. Dies entspricht einer Gutkornausbeute von 53 % des theoretisch Möglichen. Das Fehlkorn wird an den Prozeßanfang zurückgeführt. Nach vierwöchiger Lagerzeit des granulierten Produkts liegt die Berstfeste bei 31 N/Korn und der Abrieb bei 4 %.

Beispiel 5

In der Mischung nach Beispiel 4 wird das Kaliumdihydrogenphosphat durch 1,5 Gewichtsteile Diammoniumhydrogenphosphat ersetzt. Man erhält hier praktisch das gleiche Ergebnis wie im Beispiel zuvor.

Beispiel 6

Eine Mischung aus 434 Gewichtsteilen Rückgut, 288 Gewichtsteilen Kaliumsulfat mit einem Gehalt von 51,3 % K₂O und 180 Gewichtsteilen Staubkieserit mit einem Gehalt von 27,4 % MgO wird mit einem Gemisch von 6 Gewichtsteilen einer 36 %igen Natriumdihydrogenphosphatlösung und 92 Gewichtsteilen Wasser angefeuchtet und zum Granulieren in der Trommel gerollt. Die grünen Granalien werden dann auf 4 % Restfeuchte getrocknet. Beim Sieben der getrockneten Granalien fallen 490 Gewichtsteile Gutkorn und 434 Gewichtsteile Fehlkorn an. Die Gutkornausbeute beträgt 53 %. Das Produkt hat Gehalte von 30 % K₂O und 10 % MgO.

Die Berstfeste liegt sofort nach dem Trocknen schon bei 24 N/Korn. Innerhalb von 5 Tagen steigt sie auf 57 N/Korn an. Der Abrieb liegt im Test bei 3 %; bei längerer Lagerung treten keine Veränderungen mehr ein.

Wenn man die gleiche Mischung ohne den Phosphatzusatz als Hilfsmittel granuliert, so stellt man fest, daß man statt ca 11 % Grünfeuchte zum Granulieren je nach Temperatur der Granuliermischung 13 bis 15 % Grünfeuchte nötig hat. Weil die Komponenten Kaliumsulfat und Kieserit ohne das Phosphat viel zu schnell unter Doppelsalzbildung reagieren und die Granalien schon vor der letzten Formgebung aushärten, hat das Produkt, welches ohne Phosphat hergestellt wurde, ein weniger gutes Aussehen als das mit Phosphat. Wegen der rauheren Oberfläche der ohne das Hilfsmittel hergestellten Granalien fällt der Abrieb im Test mit 5 bis 6 % höher aus als bei den glatteren Granalien.

Offensichtlich verlangsamt das wasserlösliche Phosphat sowohl die Hydratation des Kierserits als auch die Doppelsalzbildung aus hydratisiertem Kierserit und Kaliumsulfat, so daß die in der richtigen Körnung und Grünfeuchte vorliegende Granuliermischung während des Rollvorgangs ausreichend lange plastisch bleibt.

## Patentansprüche

1. Verfahren zum Granulieren von Kieserit und von Kieserit-Kaliumsulfat-Mischungen durch Rollen der wasserfeuchten Granuliermasse, dadurch gekennzeichnet, daß man dem durch Aufmahlen und Sieben von Fehlkorn auf eine Körnung von 50 bis 60 % unter 0,5 mm und 90 % unter 1 mm hergestellten Rückgut frische Mischung mit einem Gehalt von mindestens 20 % an Staubkieserit mit einer Körnung von 50 bis 60 % unter 0,063 mm nach Maßgabe der Gutkornausfuhr und ein wasserlösliches Phosphat in einer Dosierung von 0,1 bis 8 %, bezogen auf die Masse der frischen Mischung, zusetzt, die Gesamtmischung vor dem Rollen auf eine Feuchte von 9 bis 13 % einstellt, diese dann durch Rollen granuliert und schließlich die Granalien auf eine Restfeuchte von 1 bis 4 % trocknet und auf Gut- und Fehlkorn aufsiebt.

2. Verfahren nach Anspruch 1, dadurch gekennzeichnet, daß man der Granuliermasse 1 bis 8 % Calciumdihydrogenphosphat, bezogen auf ihren Frischgutanteil, zusetzt.

3. Verfahren nach Ansprüchen 1 und 2, dadurch gekennzeichnet, daß man das Calciumdihydrogenphosphat vor der Befeuchtung mit den trockenen Komponenten der Granuliermischung vormischt.

4. Verfahren nach Anspruch 1, dadurch gekennzeichnet, daß das wasserlösliche Phosphat ein beliebiges Alkali- oder Ammoniumphosphat mit einem Dihydrogen-, Monohydrogen- oder einem Phosphatanion ist.

5. Verfahren nach Ansprüchen 1 und 4, dadurch gekennzeichnet, daß der Mischung 0,2 bis 0,6 % Alkaliphosphat, bezogen auf den Frischgutanteil, zugesetzt werden.

6. Verfahren nach Ansprüchen 1, 4 und 5, dadurch gekennzeichnet, daß man das Alkaliphosphat als Lösung mit dem Granulierwasser zusammen zur Mischung zusetzt.

## Revendications

1. Procédé pour granuler de la kiesérite et de mélanges de kiesérite et de sulfate de potassium par roulage de la matière à granuler humide, caractérisé en ce que l'on ajoute à la matière de recyclage produite par le broyage et tamisage du grain pour une granulation de 50 à 60% en dessous de 0,5 mm et 90% en dessous de 1 mm un mélange frais avec une teneur d'au moins 20% de kiesérite pulvérisée d'une granulation de 50 à 60% en dessous de 0,063 mm suivant de bons grains évacués et un phosphate hydrosoluble d'un dosage de 0,1 à 8% portant sur la masse du mélange frais, puis, que l'on règle le mélange total avant le roulage sur une humidité de 9 à 13%, la granule par roulage et finalement sèche les grénailles à une humidité restante de 1 à 4% et tamise sur bons grains et grains défectueux.

2. Procédé suivant la revendication 1, caractérisé en ce que 1 à 8% de calcium phosphate dihydrogène est ajouté à la matière granuler portant sur sa fraction de matière fraîche.

3. Procédé suivant les revendications 1 et 2, caractérisé en ce que calcium phosphate dihydrogène est mélangé avant l'humectation avec des composants secs du mélange de granulation.

4. Procédé suivant la revendication 1, caractérisé en ce que le phosphate hydrosoluble est un phosphate quelconque d'alcali ou d'ammonium avec un anion dihydrogène, monohydrogène ou phosphate.

5. Procédé suivant les revendications 1 et 4, caractérisé en ce que 0,2 à 0,6% phosphate alcali est ajouté au mélange, porté sur la fraction de matière fraîche.

6. Procédé suivant les revendications 1, 4 et 5, caractérisé en ce que le phosphate alcali est ajouté au mélange comme solution avec l'eau de granulation, les deux ensemble.

## Claims

1. A method of granulating kieserite and kieserite-potassium sulfate mixtures by rolling of a watermoist granulating mass, comprising the steps of producing a return product by treating deficient grain to a grain size of 50–60% under 0,5 mm and 90% under 1 mm; adding to the return product a fresh mixture with a content of at least 20% of dust kieserite with a grain size of at least 50–60% under 0.063 mm in proportion to a desired output of correct grain and a water soluble phosphate in dose of 1.0–8% relative to the mass of the fresh mixture, so as to form a total mixture; adjusting the total mixture prior to rolling to a moisture of 9–13%; then granulating the total mixture by rolling; drying the granules to a residual moisture of 1–4%, and separating the dried granules into correct grains and deficient grain.

2. A method as defined in claim 1, characterized in that 1–8% of calcium dihydrogen phosphate is added to the total mixture, in correspondence with its fresh mixture portion.

3. A method as defined in claims 1 and 2, comprising the step of moisturizing the total mixture, said drying of the granules including adding dry components, said adding of calcium dihydrogen phosphate being performed prior to the moisturizing and together with the adding of the dry components.

4. A method as defined in claim 1, characterized in that the water soluble phosphate includes a phosphate selected from the group consisting of any alkali phosphate and ammonium phosphate with an anion selected from the group consisting of a dihydrogen phosphate anion, monohydrogen phosphate anion and phosphate anion.

5. A method as defined in claims 1 and 4, and further comprising adding to the mixture 0.2–0.6% of alkali phosphate relative to the fresh product part.

6. A method as defined in claims 1, 4 and 5, and further comprising the step of adding a granulating water, said adding of the alkali phosphate including adding the alkali as a solution with the granulating water to the mixture.